# EUROPEAN PATENT APPLICATION

(11) **EP 4 847 890 A1**
(43) Date of publication of application: **02.12.2026**
(21) Application number: 25744852.2
(22) Date of filing: 20.01.2025
(51) Int. Cl.: G01G 17/02, B29B 15/10, C08J 5/04, G01B 15/02, G01G 9/00, G01N 23/06, G01N 23/16, G01N 23/083, B29K 105/14

(54) **METHOD FOR MEASURING MASS OF BASE MATERIAL OF TAPE-SHAPED PREPREG OR REINFORCING FIBER BUNDLE BASE MATERIAL, AND METHOD FOR PRODUCING TAPE-SHAPED PREPREG BASE MATERIAL**

(30) Priority: 23.01.2024 JP 2024007801; 06.09.2024 JP 2024153640
(71) Applicant: Toray Industries, Inc., Tokyo 103-8666 (JP)
(72) Inventor: IMAIIDA, Naomichi, Iyo-gun, Ehime 791-3193 (JP); MIZUSAWA, Tomoki, Iyo-gun, Ehime 791-3193 (JP)
(74) Representative: Kador & Partner Part mbB
(86) International application number: PCT/JP2025/001505
(87) International publication number: WO 2025/159038

(57) **Abstract**

There is provided a method for detecting a base material mass of a tape-shaped prepreg base material with high accuracy. A method for measuring a base material mass of a tape-shaped prepreg base material having a width of 1 to 20 mm and including a reinforcing fiber and a matrix resin includes: irradiating the tape-shaped prepreg base material with a radiation dose from a radiation source while traversing, in a width direction of the tape-shaped prepreg base material, a radiation device including the radiation source and a radiation detector; determining a radiation attenuation rate from a radiation dose incident on the radiation detector after transmission through the base material; and calculating a mass per unit area of the tape-shaped prepreg base material based on the radiation attenuation rate, wherein the radiation attenuation rate Ns of the tape-shaped prepreg base material is determined as a sum of area values of logNt of radiation attenuation rates Nt at respective points t, where t is an integer ranging from 1 to n, in the width direction.
[Mathematical formula 1] $Ns = A {\sum }_{t = 1}^{n} log Nt$ (1)
Nt: radiation attenuation rate at each point t when radiation attenuation rates at n points are measured in a range from a = T1 to a = T2 in a width direction of the base material defined as an a-direction
Ns: radiation attenuation rate (area value of natural logarithm logNt of Nt at each point t)
A: operator (constant)
n: arbitrarily settable natural number

## Description

### TECHNICAL FIELD

The present invention relates to a method for measuring a base material mass, i.e., a basis weight, of a tape-shaped prepreg or reinforcing fiber bundle base material.

### BACKGROUND ART

Fiber-reinforced composite materials (FRP) in which a matrix resin containing a thermoplastic resin or a thermosetting resin is reinforced with a reinforcing fiber are used in various fields such as aerospace materials, automobile materials, industrial materials, pressure vessels, construction materials, housings, medical applications, and sports applications. In particular, carbon fiber-reinforced composite materials (CFRP) are widely used when high mechanical properties and lightness are required. On the other hand, when cost has priority over mechanical properties and lightness, glass fiber-reinforced composite materials (GFRP) are used.

FRP is produced mainly as a member by impregnating a reinforcing fiber bundle with a matrix resin to obtain an intermediate base material, which is laminated, formed, and further thermally cured when a thermosetting resin is used as the matrix resin. In the above-described applications, three-dimensional objects with complex bent shapes have become more common than simple planar structures in recent years. To conform to such three-dimensional shapes, as FRP intermediate base materials, narrow tape-shaped intermediate base materials laminated at high speed are attracting attention from the viewpoints of efficiency and formability, compared with wide sheet-shaped intermediate base materials.

For example, in automotive applications, a pressure vessel in which a metal or resin liner is reinforced with a fiber-reinforced composite material is used for a highpressure tank mounted on a natural gas vehicle, a fuel cell vehicle, or the like. The pressure vessel is produced by winding a tape-shaped intermediate base material of a reinforcing fiber bundle and a thermosetting resin around the outer periphery of the liner to form a molded body, followed by thermal curing. This production method is called a filament winding method (FW method). Since the strength and mass of the molded body greatly depend on the amount of resin adhered, techniques for monitoring and controlling the amount of resin adhered to the reinforcing fiber tape have been proposed (Patent Documents 1 and 2).

Inspection using a radiation source is performed to measure the thickness of the base material as a measured material and the mass per unit area of a coating film, and a transmission inspection device using radiation is a thickness measurement device based on a principle in which the amount of radiation transmitted varies with the thickness of the measured material. In a general measurement method, radiation emitted from a radiation source passes through a measured material and is received by a sensor of a radiation detector. The energy received by a sensor of the radiation detector is converted into an electric pulse, transmitted through a data transmission unit, and output to a monitor. When radiation passes through the measured material, the intensity of the electrical pulse changes according to the thickness of the measured material, enabling measurement of the thickness of the measured material.

In thickness measurement of a measured material by radiation, radiation emitted from the radiation source tends to spread, and the detection range of the receiving sensor becomes a wide area. Patent Documents 3, 4, and 5 disclose techniques for improving detection accuracy in the measurement of the thickness when the measured material is sheet-shaped. In Patent Document 5, masks partially covering sensor surfaces of a radiation detector are each attached in front of the corresponding sensor surfaces to improve detection accuracy. As a result, the radiation detector can receive radiation in a range narrower than the surface of the receiving sensor, and a reduction in the measurement area of the measured material per unit time enables sensitive measurement of the thickness of the measured material even if the thickness of the measured material varies within a narrow range.

### PRIOR ART DOCUMENT

### PATENT DOCUMENTS

Patent Document 1: Japanese Patent No. 6579092
Patent Document 2: Japanese Patent No. 7002484
Patent Document 3: Japanese Patent Laid-open Publication No. 2007-298387
Patent Document 4: Japanese Patent Laid-open Publication No. 2007-51978
Patent Document 5: Japanese Patent Laid-open Publication No. 2002-296021

### SUMMARY OF THE INVENTION

### PROBLEMS TO BE SOLVED BY THE INVENTION

Inspection of FRP using a radiation source presumes the use of a wide sheet. When the width of the measured material is narrow, the receiving sensor of the radiation detector simultaneously receives radiation transmitted through the measured material and radiation not transmitted therethrough, thereby desensitizing the sensor output pulse and preventing attainment of stringent measurement accuracy requirements.

That is, in the case of measuring a narrow tape-shaped base material or a reinforcing fiber bundle base material, diffraction of radiation generated at the end portion of the base material degrades detection accuracy, and a disturbance such as tension application during measurement causes fluctuations in the base material width and thickness. Accordingly, the detection accuracy varies significantly depending on the method of computing the electrical signal incident on the receiving sensor of the radiation detector and the detection method of the radiation detector.

An object of the present invention is, in a method for inspecting a narrow tape-shaped prepreg base material or a reinforcing fiber bundle base material, to provide a method for detecting at least one of base material mass, resin mass, and thickness with high accuracy based on a radiation attenuation rate to be obtained by defining a detection method and a computation method.

### SOLUTIONS TO THE PROBLEMS

An inspection method of the present invention to solve the above-described problem is as follows.
1. A method for measuring a base material mass of a tape-shaped prepreg base material having a width of 1 to 20 mm and including a reinforcing fiber and a matrix resin, the method comprising: irradiating the tape-shaped prepreg base material with a radiation dose V₀ from a radiation source while traversing, in a width direction of the tape-shaped prepreg base material, a radiation device including the radiation source and a radiation detector; determining a radiation attenuation rate Ns, which is a ratio of V to V₀, from a radiation dose V incident on the radiation detector after transmission through the base material based on Formula 2 and Formula 3; and calculating a mass d per unit area of the tape-shaped prepreg base material based on the radiation attenuation rate Ns, wherein the radiation attenuation rate Ns of the tape-shaped prepreg base material is determined, based on Formula 1, as a sum of area values of logNt of radiation attenuation rates Nt at respective points t, where t is an integer ranging from 1 to n, in the width direction.
   [Mathematical formula 1] $\begin{matrix}Ns = A {\sum }_{t = 1}^{n} log Nt Formula 1 \\ V = {V}_{0} exp \left(-{u}_{s}⋅{d}_{s}\right) Formula 2 \\ log Ns = - {u}_{s} ⋅ {d}_{s} Formula 3\end{matrix}$
   uₛ: mass attenuation coefficient of tape-shaped prepreg base material
   dₛ: base material mass of tape-shaped prepreg base material
   Nt: radiation attenuation rate at each point t when radiation attenuation rates at n points are measured in a range from a = T1 to a = T2 in a width direction of the base material defined as an a-direction
   Ns: radiation attenuation rate (area value of natural logarithm logNt of Nt at each point t)
   A: operator (constant)
   n: arbitrarily settable natural number
2. The method for measuring a base material mass of a tape-shaped prepreg base material according to 1, wherein (W1 × D2)/(WO × D1) exceeds 0 and is 0.3 or less, where WO is a base material width, W1 is a width of radiation incident on the radiation detector, D1 is a distance from an emitting portion of the radiation source to a receiving portion of the radiation detector, and D2 is a distance from the emitting portion of the radiation source to the tape-shaped prepreg base material.
3. The method for measuring a base material mass of a tape-shaped prepreg base material according to 1 or 2, wherein the tape-shaped prepreg base material to be measured has a width of 1 to 20 mm and a standard deviation of base material width of 0.1 mm or more over a length of 3000 m in a longitudinal direction.
4. A method for producing a tape-shaped prepreg base material, the method comprising: applying a resin to a reinforcing fiber or impregnating the reinforcing fiber with the resin to obtain a tape-shaped prepreg base material; and determining, for the tape-shaped prepreg base material, a base material mass per unit length in a length direction or a resin mass per unit length in the length direction by the method for measuring a base material mass of a tape-shaped prepreg base material according to any one of 1 to 3, wherein control is performed during application or impregnation so that a value of a determined item matches a target value.
5. A method for measuring a base material mass of a reinforcing fiber bundle, the method comprising: irradiating a reinforcing fiber bundle base material having a width of 1 to 20 mm with a radiation dose V₀ from a radiation source while traversing, in a width direction of the reinforcing fiber bundle base material, a radiation device including the radiation source and a radiation detector; determining a radiation attenuation rate Nb, which is a ratio of V to V₀, from a radiation dose V incident on the radiation detector after transmission through the reinforcing fiber bundle base material based on Formula 5 and Formula 6; and calculating a mass d per unit area of the reinforcing fiber bundle base material based on the radiation attenuation rate Nb, wherein the radiation attenuation rate Nb of the reinforcing fiber bundle base material is determined as a sum of area values of logNt of radiation attenuation rates Nt at respective points point t, where t is an integer ranging from 1 to n, in the width direction based on Formula 4.
   [Mathematical formula 2] $\begin{matrix}Nb = A {\sum }_{t = 1}^{n} log Nt Formula 4 \\ V = {V}_{0} exp \left(-{u}_{b}⋅{d}_{b}\right) Formula 5 \\ log Nb = - {u}_{b} ⋅ {d}_{b} Formula 6\end{matrix}$
   u_{b}: mass attenuation coefficient of reinforcing fiber bundle base material
   d_{b}: base material mass of reinforcing fiber bundle
   Nt: radiation attenuation rate at each point t when radiation attenuation rates at n points are measured in a range from a = T1 to a = T2 in a width direction of the base material defined as an a-direction
   Nb: radiation attenuation rate (area value of natural logarithm logNt of Nt at each point t)
   A: operator (constant)
   n: arbitrarily settable natural number
6. The method for measuring a base material mass of a reinforcing fiber bundle according to 5, wherein (W1 × D2)/(WO × D1) exceeds 0 and is 0.3 or less, where WO is a base material width, W1 is a width of radiation incident on the radiation detector, D1 is a distance from an emitting portion of the radiation source to a receiving portion of the radiation detector, and D2 is a distance from the emitting portion of the radiation source to the reinforcing fiber bundle base material.
7. The method for measuring a base material mass of a reinforcing fiber bundle according to 5 or 6, wherein, in a reinforcing fiber bundle base material having a width of 1 to 20 mm, the reinforcing fiber bundle to be measured has a standard deviation of base material width of 0.1 mm or more over a length of 3000 m in a longitudinal direction.
8. The method for producing a tape-shaped prepreg base material according to 4, the method comprising: determining the resin mass by subtracting the base material mass of the reinforcing fiber bundle, obtained by the method for measuring a base material mass of a reinforcing fiber bundle according to any one of 5 to 7, from the base material mass of the tape-shaped prepreg base material, obtained by the method for measuring a base material mass of a tape-shaped prepreg base material according to any one of 1 to 3, wherein control is performed so that the resin mass matches a target value.

### EFFECTS OF THE INVENTION

According to the method for inspecting narrow base materials of the present invention, it is possible to detect at least one of base material mass, resin mass, or thickness with high accuracy based on the radiation attenuation rate to be obtained by defining the detection method and the computation method, thereby stabilizing quality of a product.

### BRIEF DESCRIPTION OF THE DRAWINGS

Fig. 1 shows a top view and a side cross-sectional view illustrating the configuration of a transmission inspection device according to an embodiment of the present invention.
Fig. 2 shows a top view illustrating the configuration of a transmission inspection device according to an embodiment of the present invention.
Fig. 3 shows a side cross-sectional view of a measurement device used to measure a wide sheet and a graph illustrating transition of a radiation attenuation rate obtained when thickness and mass are measured by a conventional method.
Fig. 4 shows a side cross-sectional view of a measurement device used to measure a tape-shaped prepreg base material and a graph illustrating transition of a radiation attenuation rate obtained when thickness and mass are measured by a conventional method.
Fig. 5 shows an example of a general measurement principle and calculation formulas for detection by a radiation detector.
Fig. 6 shows a side cross-sectional view of a measurement device used to measure a tape-shaped prepreg base material using the measurement method of the present invention and an example of a method of calculating a radiation attenuation rate.
Fig. 7 shows a side cross-sectional view illustrating a state in which a cover partially covering a radiation receiving portion of a radiation detector is attached to the radiation receiving portion to measure base material mass of a tape-shaped prepreg base material.
Fig. 8 shows a schematic embodiment of a method for producing a tape-shaped prepreg base material using a measurement method of the present invention.

### EMBODIMENTS OF THE INVENTION

Preferred embodiments of the present invention will be described with reference to the drawings. Note that the following description illustrates embodiments of the present invention, the present invention is not to be construed to be limited to the embodiments, and various modifications can be made to the invention to the extent that they do not depart from the object and effect of the present invention.

### <Outline of Measurement Method>

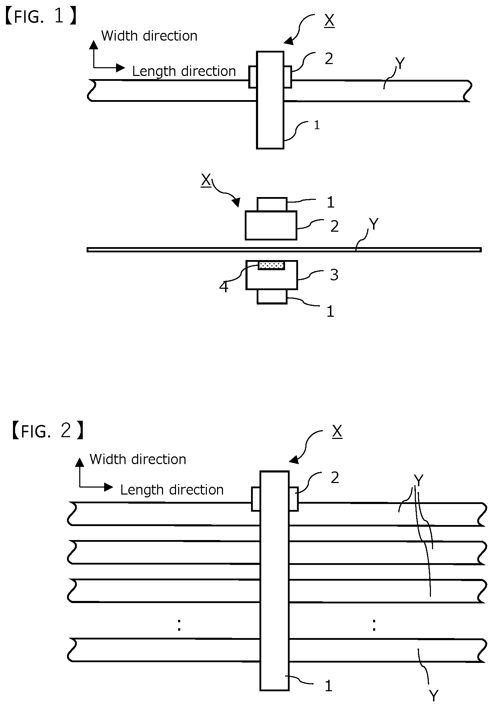

First, an outline of the present invention will be described with reference to Figs. 1 and 2 using a method for measuring a base material mass of a tape-shaped prepreg base material (hereinafter referred to as tape-shaped base material) as an example. In the present invention, the tape-shaped base material contains reinforcing fibers and a matrix resin, and more specifically, a prepreg formed by impregnating reinforcing fibers with a matrix resin takes a tape-shaped form. In the present invention, the reinforcing fiber bundle base material refers to a bundle of reinforcing fibers, and can be formed into a tape-shaped base material by impregnating the reinforcing fiber bundle base material with a matrix resin.

Fig. 1 is a diagram illustrating a configuration of a radiation transmission inspection device that measures base material mass of a tape-shaped base material according to one embodiment of the present invention. A radiation device X is a transmissive measuring device configured to measure the base material mass of a tape-shaped prepreg base material, simply referred to as a tape-shaped base material Y, by detecting an attenuation amount of intensity of radiation transmitted through the tape-shaped base material Y. The radiation device X includes a radiation source 2, a radiation detector 3, and a support frame 1 (an example of an equipment moving unit) provided with a drive unit configured to support the radiation source 2 and the radiation detector 3 so as to be movable in a width direction of the tape-shaped base material Y. The radiation source 2 and the radiation detector 3 constituting the radiation device X can be installed to face each other with the tape-shaped base material Y interposed therebetween, and can be held in a facing state by the support frame 1 including the drive unit.

As illustrated in Fig. 2, a method of measuring and inspecting the base material mass of a plurality of tape-shaped base materials Y arranged in parallel using one radiation device X is preferred from the viewpoint of improving process efficiency. In the present invention, the tape-shaped base material Y may or may not travel in the longitudinal direction (length direction) thereof.

Next, a measurement operation of the measurement device configured as described above will be described. When an instruction to start the measurement of the tape-shaped base material Y is given, the radiation device X is driven in the width direction orthogonal to the longitudinal direction of the tape-shaped base material Y. This movement of the radiation device X is the "traverse" as used herein and may be effected with or without a driving force. As a result, the radiation device X traverses the width direction of the tape-shaped base material Y, and the base material mass of the tape-shaped base material Y is measured. When the tape-shaped base material Y travels in the longitudinal direction thereof, the base material mass of the tape-shaped base material Y can be continuously measured in the length direction by traversing the radiation device X as a reciprocating motion that repeats crossing in the width direction of the base material. The radiation to be irradiated is not particularly limited, but any one of β-rays, X-rays, or γ-rays can be selected according to the thickness and raw material of the base material to be measured.

### <Method of Computing Radiation Attenuation Rate of Tape-shaped Base Material>

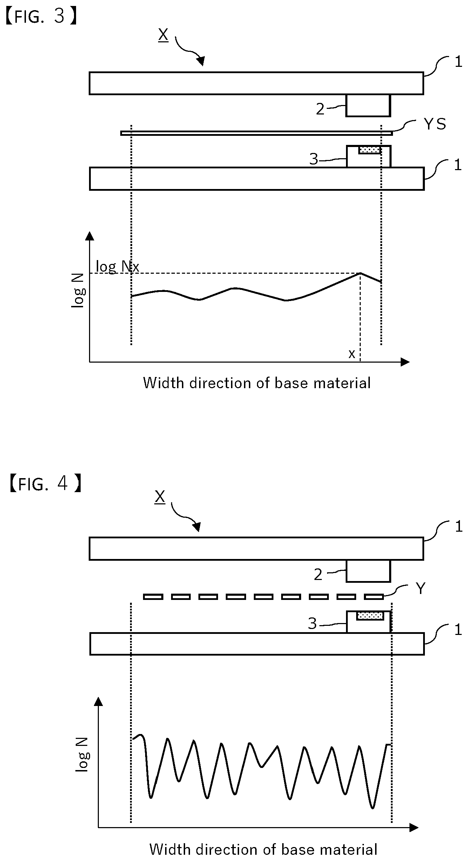

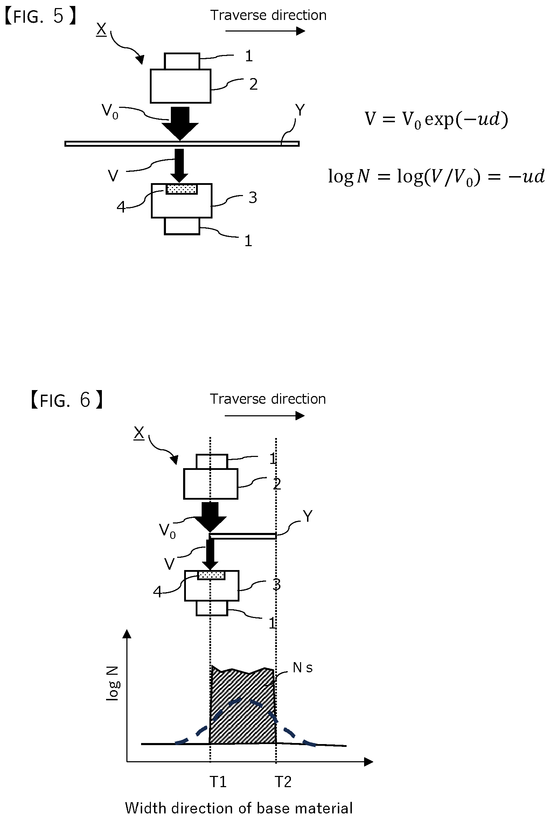

In the method for measuring the base material mass of the present invention, the radiation source 2 and the radiation detector 3 arranged to face each other are used. The radiation V₀ emitted from the radiation source 2 enters from the surface of the tape-shaped base material Y on the radiation source side, passes through the base material, exits from the other surface, and reaches the radiation detector 3. At this time, the radiation emitted from the radiation source 2 is attenuated by being transmitted through the air and the tape-shaped base material Y (see Fig. 5). Using the data of the radiation dose V after attenuation detected by the receiving portion 4 of the radiation detector 3, the base material mass d of the tape-shaped base material or the reinforcing fiber base material is measured on the basis of a predetermined calculation formula. In general, when the sheet-shaped base material YS illustrated in Figs. 3 and 5 is a measurement object, the radiation dose V detected by the radiation detector is obtained as the radiation dose V detected by the radiation detector illustrated in Formula 7, the radiation attenuation rate N is measured at each position in the width direction of the base material, and logN (N is a natural logarithm) is obtained as in the graph illustrated in Fig. 3. From the obtained logN, the base material mass d at each position is determined according to Formula 8. Here, the coefficient of attenuation u of the base material is a constant determined by the material or the type of resin. The attenuation rate or transmittance of the radiation dose is proportional to the thickness [m]. Mass [kg] can be converted into mass per unit area using density [kg/cm³], and as a result, the attenuation rate of the radiation dose is proportional to the mass. [Mathematical formula 3] $\begin{matrix}V = {V}_{0} exp \left(-ud\right) Formula 7 \\ log N = - ud Formula 8\end{matrix}$

V: Radiation dose detected by radiation detector
V₀: Radiation dose emitted from radiation source
N: Radiation attenuation rate (= V/V₀) at each position in width direction of base material
u: Mass attenuation coefficient
d: Base material mass

However, when the tape-shaped base material or reinforcing fiber base material having a width of 1 to 20 mm is irradiated with radiation from the radiation source while being traversed in the width direction of the base material in the radiation device X including the radiation source 2 and the radiation detector 3, and the radiation attenuation rate is determined from a radiation dose incident on the radiation detector after transmission through the base material, the base material width and thickness vary, and the radiation dose is detected including both a portion where the tape-shaped base material Y is present and a portion where the tape-shaped base material Y is absent. As illustrated in Fig. 4, logN obtained by traversing a plurality of tape-shaped base materials Y arranged in parallel in the width direction of the base material is such that radiation that is not transmitted through the measured material (radiation hardly attenuated) is also simultaneously received by the receiving sensor of the radiation detector, thereby deteriorating measurement accuracy of the base material mass.

Furthermore, when a tape-shaped base material or a reinforcing fiber bundle base material having a narrow width is measured, the reason for this is that the attenuation of radiation is apparently less likely to occur due to the diffraction of radiation occurring at the end portion of the base material. Furthermore, if there is a disturbance such as tension application during measurement, the base material width fluctuates, and the electric signal based on the radiation dose incident on the receiving sensor of the radiation detector further fluctuates.

Therefore, in the present invention, the mass per unit length in the length direction of the tape-shaped base material or the reinforcing fiber base material is calculated from the area value of the radiation attenuation rate obtained based on Formula 1. That is, as illustrated in Fig. 6, the radiation attenuation rate Nt at each point t is determined over a range including the width direction of the base material, and then the area value Ns is calculated according to Formula 1. Subsequently, the value Ns is substituted for logN in Formula 8 to determine the base material mass d. As a result, the influence of diffraction of the radiation source occurring at the end portion of the base material is reduced, and even if the base material width and thickness fluctuate due to disturbance such as tension application during measurement, measurements with high accuracy become possible because calculation is performed over the entire base material width. In Fig. 6, the horizontal axis represents the width direction of the base material, and the vertical axis represents a graph of logN of the radiation attenuation rate N. The area value Ns (hatched region in Fig. 6) according to Formula 1 is the sum of the area values of logNt at each of n points from T1 to T2 in the width direction of the base material. In Fig. 6, measurement values of the conventional method are illustrated by a dotted line.

To minimize the influence of radiation diffraction occurring at the end portion of the base material and increase the number of measurement points unaffected by diffraction, n in Formula 1 is preferably as large as possible, and is most preferably 30 or more. Although it depends on the base material width, a preferable upper limit of n is 50, and even if n is increased to more than 50, a higher effect is not obtained in many cases.

In addition, the use of the calculation formula of the present invention has a large effect when the measurement range is equal to or greater than the base material width, and the difference (T1 - T2) between T1 and T2 indicating the measurement range in Fig. 6 is preferably equal to or greater than the base material width.
[Mathematical formula 4] $Ns = A {\sum }_{t = 1}^{n} log Nt$ Formula 1

Nt: radiation attenuation rate at each point t when radiation attenuation rates at n points are measured in a range from a = T1 to a = T2 in a width direction of the base material defined as an a-direction
Ns: radiation attenuation rate (area value of natural logarithm logNt of Nt at each point t)
A: operator (constant)
n: arbitrarily settable natural number

Note that the area value, which is calculated by Formula (1), is determined by applying an operator A to a sum of natural logarithms logNt of radiation attenuation rates Nt at respective points t from 1 to n. When radiation attenuation rates Nt at n points are measured in a range from a = T1 to a = T2, assuming that the coordinate at each point in the width direction a of the base material is represented by α, α is preferably determined based on Formula 9, which includes terms obtained by equally dividing the analysis range (T1 - T2).
[Mathematical formula 5] $α = T 1 + \left(\frac{t}{n}\right) \times \left(T1-T2\right) \left[t=1,2,…,n\right]$ Formula 9

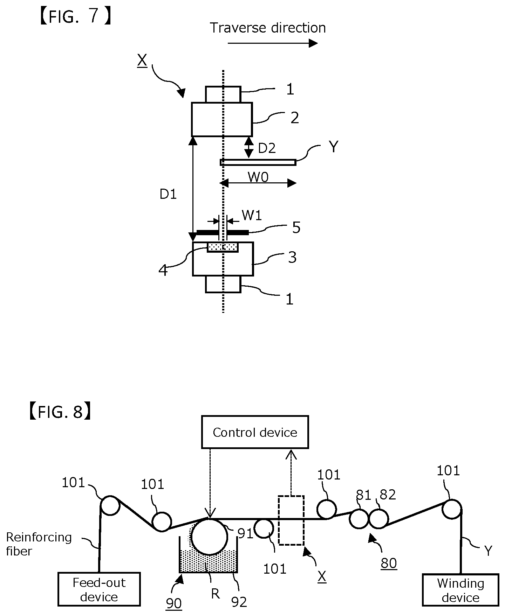

To minimize the influence of diffraction, the width of radiation incident on the receiving portion 4 of the radiation detector 3 is preferably small. Referring to Fig. 7, (W1 × D2)/(WO × D1) preferably exceeds 0 and is 0.3 or less, where WO is a base material width of the tape-shaped base material Y, W1 is a width of radiation incident on the receiving portion 4 of the radiation detector 3, D1 is a distance from an emitting portion of the radiation source to a receiving portion of the radiation detector, and D2 is a distance from the emitting portion of the radiation source to the base material. Here, each of the distances represents the shortest distance. (W1 × D2)/(WO × D1) is still more preferably 0.05 or less, and particularly preferably 0.03 or less. At this time, as illustrated in Fig. 7, a part of the front surface of the radiation receiving portion 4 of the detector 3 may be covered with the cover 5 so that the radiation can pass only through the slit-shaped opening portion extending in the width direction of the base material, and (W1 × D2)/(WO × D1) may be adjusted by reducing W1. Specifically, an aspect is illustrated in which the cover 5, which partially covers the detector 3, is attached to the detector 3.

### <Reinforcing Fiber>

Examples of the reinforcing fiber used in the present invention include carbon fiber, glass fiber, metal fiber, metal oxide fiber, metal nitride fiber, and organic fiber (e.g., aramid fiber, polybenzoxazole fiber, polyvinyl alcohol fiber, and polyethylene fiber). From the viewpoint of the mechanical properties and lightness of FRP, carbon fibers are preferably used.

### <Matrix Resin>

The matrix resin contained in the tape-shaped base material used in the present invention can be appropriately selected according to the application, and may be a matrix resin generally used in FRP, such as a thermoplastic resin, a thermosetting resin, and a photocurable resin. Further, the matrix resin can be used as a resin composition containing particles, a curing agent, and further various additives as necessary. As the matrix resin, a molten resin that is heated and melted or a matrix resin that is liquid at room temperature may be used. In addition, the matrix resin may be used in a solution form or a varnish form using a solvent.

### <Tape-shaped Prepreg Base Material>

Examples of the prepreg base material include a unidirectional material (hereinafter, referred to as UD base material) in which a plurality of reinforcing fibers are arranged on a surface in one direction, and a base material in which a reinforcing fiber fabric in which reinforcing fibers are arranged in multiple axes or randomly arranged is impregnated with a matrix resin. A method for forming the UD base material can be a known method, and is not particularly limited, but a method of forming a reinforcing fiber bundle in which single fibers are arranged in advance, further arranging the reinforcing fiber bundles in parallel to form a reinforcing fiber tape, and impregnating the reinforcing fiber tape with a matrix resin is preferable from the viewpoint of process efficiency and arrangement uniformity. For example, in a prepreg base material using carbon fibers as reinforcing fibers, "tow" which is a tape-shaped reinforcing fiber bundle is often wound around a bobbin, but a tape-shaped base material having a width in a range of 1 to 20 mm can also be obtained by impregnating a tape-shaped reinforcing fiber bundle of one thread pulled out from the bobbin with a matrix resin. Alternatively, a tape-shaped base material having a width of more than 20 mm can be obtained by impregnating a reinforcing fiber tape in which a plurality of reinforcing fiber bundles are arranged with a matrix resin, and then slitting the tape-shaped base material in the width direction to obtain a tape-shaped base material having a width in a range of 1 to 20 mm.

The width of the base material is preferably in the range of 8 to 12 mm not only in the tape-shaped base material but also in the reinforcing fiber base material because the effect of the measurement method of the present invention is remarkably exhibited. Even when the width of the base material shows a constant standard deviation in a certain length in the longitudinal direction, if the width of the portion to be measured is 1 to 20 mm, the base material may be said to have a width in the range of 1 to 20 mm.

In addition, since the measurement method according to the present invention enables high-accuracy measurement even when the base material width of the tape-shaped base material or reinforcing fiber base material varies, the method is suitably used when the base material to be measured has a standard deviation of base material width of 0.1mm or more over a length of 3000m in the longitudinal direction. When the standard deviation at a length of 2000 m is 0.1 mm or more, the effect of the invention may be more clearly shown than in the conventional method, and when the standard deviation at 1000 m is 0.1 mm or more, the effect may be further shown. Although there is no upper limit to the standard deviation of the base material width that can be a measurement target, a normally preferable range is 2.0mm or less. The effect of the present invention is preferably increased as the width variation of the base material width is larger. The standard deviation is determined by measuring widths at 50 points or more at intervals of 1 point or more per meter in a longitudinal direction of the tape-shaped base material or the reinforcing fiber base material, for example, by measuring the base material width every 0.017m.

### <Method for Producing Tape-shaped Prepreg Base Material>

In an example of a UD base material, Fig. 8 illustrates a schematic embodiment of a method for producing a tape-shaped base material Y using the measurement method of the present invention. The manufacturing apparatus used in the production method includes a resin application device 90 configured to apply the resin R to one or both surfaces of one or more reinforcing fibers fed out from a feed-out device, a radiation device X configured to measure, for the tape-shaped base material Y after the resin application, base material mass per unit length in the length direction or resin mass per unit length in the length direction, a take-up unit 80, and a winding unit. The resin mass per unit length in the length direction can be calculated by subtracting the base material mass of the reinforcing fiber base material per unit length in the length direction from the mass of the tape-shaped base material per unit length in the length direction.

That is, the resin mass can be determined by subtracting, from a base material mass u obtained from logNs based on the radiation attenuation rate Ns of the tape-shaped prepreg base material containing the reinforcing fibers and the matrix resin, the mass u of only the base material obtained from logNb based on the radiation attenuation rate Nb of the reinforcing fiber bundle base material. At this time, in this calculation, the radiation attenuation rate Ns of the tape-shaped prepreg base material containing reinforcing fibers and the matrix resin is determined, based on Formula 1, as a sum of area values of logNt of radiation attenuation rates Nt at respective points t, where t is an integer ranging from 1 to n, in the width direction. In this calculation, the radiation attenuation rate Nb of the reinforcing fiber bundle base material is determined, based on Formula 4, as a sum of area values of logNt of radiation attenuation rates Nt at respective points, where t is an integer ranging from 1 to n, in the width direction.

In the step 90 of applying the resin R, the resin R and a resin application roll 91 are provided in a resin reservoir 92, and the resin R is stored in the resin reservoir 92. The application roll 91 is rotated to apply the resin R to one surface of the reinforcing fiber, and the amount of the resin R applied to the reinforcing fiber is adjusted by changing the rotation speed. Therefore, when values of determination items such as the base material mass per unit length in the length direction or the resin mass per unit length in the length direction of the tape-shaped base material Y as measured by the radiation device X after resin application deviate from predetermined target values, the rotation speed of the resin application roll 91 may be changed, for example, to stably produce a tape-shaped base material Y with the prescribed base material mass. The take-up unit 80 includes a nip roll 81 and a drive roll 82, and has a function of feeding the tape-shaped base material Y to the winding unit.

The upper limits and the lower limits of the numerical ranges described above can be arbitrarily combined.

### EXAMPLES

### <Confirmation of Detection Accuracy Using Tape-shaped Prepreg Base Material>

Hereinafter, the present invention will be described more specifically with reference to Examples, but the present invention is not necessarily limited to these aspects. In Examples, the improvement in measurement accuracy was evaluated using the method for measuring a base material mass of a tape-shaped base material according to the present invention.

### <Tape-shaped Prepreg Base Material>

As a tape-shaped prepreg base material for measuring detection accuracy, a bundle obtained by aligning carbon fibers ("TORAYCA (registered trademark)" T900S (36K) single thread) in one direction was impregnated with a composition containing a thermosetting epoxy resin, and the amount of the composition adhered was varied to prepare and use in advance seven levels of towpreg having a width of about 10 mm and different masses per unit length in the length direction. Note that the mass per unit length of the prepared towpreg in the length direction was determined by cutting out the prepared towpreg in units of 1m in the length direction and measuring the mass with a balance, and the results were (1) 2.21, (2) 2.15, (3) 2.12, (4) 2.10, (5) 2.07, (6) 2.05, and (7) 2.02 g/m. At the time of producing the towpreg, the towpreg width was measured every 0.017 m in the length direction of 700 m of the towpreg, and the standard deviation calculated was 0.37 mm.

### <Confirmation of Detection Accuracy>

The detection accuracy of the cut towpreg was evaluated using an X-ray thickness gauge (SX-1100) manufactured by Nanogray Inc. The tube voltage, the tube current, and the irradiation size of the X-ray source unit were set to conditions of 8 kV, 30uA, and φ of about 7.5 mm, respectively, the radiation source 2 and the radiation receiving portion 4 of the radiation detector 3 were installed so as to face each other with the towpreg to be measured interposed therebetween, moved in the same direction at the same speed of 15 mm/sec in the width direction of the towpreg, and measured. At this time, when the distance from the emitting portion of the radiation source 2 to the receiving portion 4 of the radiation detector 3 is D1 and the distance from the emitting portion of the radiation source 2 to the towpreg is D2, the radiation source 2 and the receiving portion 4 of the radiation detector 3 were arranged such that D1/D2 = 2 (the same applies to the confirmation of the detection accuracy using the reinforcing fiber bundle base material described later).

### <Examples 1 to 4 and Comparative Examples 1 to 4>

Using the method according to the prior art, detection was performed by the radiation detector 3 at one point in the width direction of the base material. As illustrated in Fig. 4, the radiation attenuation rate logN was determined, and the base material mass d was calculated. The results are shown as Comparative Examples 1 to 4 in Table 1. The results of calculating the base material mass d based on Formulas 1 to 3 of the present invention are shown as Examples 1 to 4 in Table 1.

In Comparative Examples 2 to 4 and Examples 2 to 4, the metal cover 5 partially covering the radiation receiving portion 4 was attached to the front surface of the radiation receiving portion 4 so that the radiation can pass only through the slit-shaped opening portion extending in the width direction of the base material, and (W1 × D2)/(WO × D1) was reduced with respect to each of Example 1 and Comparative Example 1 (the same applies to the confirmation of the detection accuracy using the reinforcing fiber bundle base material described later). In Table1, a length in the width direction of the base material of a slit-shaped opening portion (i.e., W1) × a length in the longitudinal direction of the base material is indicated as "Slit".

The detection accuracy was evaluated based on the mass per unit length in the length direction of the towpreg, which had been cut out and measured with a balance at seven levels, and the coefficient of determination R2 between the mass per unit length and a measured value obtained by a method using a radiation device. The coefficient of determination R2 is an index of correlation, which indicates the proportion to which predictions from a regression model agree with the actual data. R2 is usually expressed between 0 and 1. The larger R2 is, the higher the correlation is, indicating that the result by the calculation model matches the actual data.

From Table 1, comparison between Comparative Example 1 and Example 1 shows that the use of the measurement method according to the present invention increases the coefficient of determination R2 to 0.935, and improves the measurement accuracy, as compared with the case of using the method according to the prior art. In addition, comparing Examples 1 to 4, it can be seen that in a case where a cover partially covering the X-ray detector is attached to the front surface of the X-ray detector so that the radiation can pass only through the slit-shaped opening portion extending in the width direction of the base material, the coefficient of determination R2 increases to 0.95 or more, and the coefficient of determination R2 further increases and the measurement accuracy is improved by decreasing (W1 × D2)/(WO × D1).

**[Table 1]**

| | Comparative Example 1 | Comparative Example 2 | Comparative Example 3 | Comparative Example 4 | Example 1 | Example 2 | Example 3 | Example 4 |
|---|---|---|---|---|---|---|---|---|
| Slit | None | 4 × 20 | 1 × 20 | 0.5 × 20 | None | 4 × 20 | 1 × 20 | 0.5 × 20 |
| Calculation method | Nt (1 point) | Nt (1 point) | Nt (1 point) | Nt (1 point) | Ns (Area) | Ns (Area) | Ns (Area) | Ns (Area) |
| (W1 × D2)/ (WO × D1) | 0.75 | 0.2 | 0.05 | 0.025 | 0.75 | 0.2 | 0.05 | 0.025 |
| R2 [-] coefficient of determination | 0.375 | 0.210 | 0.198 | 0.169 | 0.935 | 0.951 | 0.957 | 0.961 |

### <Confirmation of Detection Accuracy Using Reinforcing Fiber Bundle Base Material>

### <Reinforcing Fiber Bundle Base Material>

As a reinforcing fiber bundle base material for measuring the detection accuracy, carbon fibers ("TORAYCA (registered trademark)" T800S (24 K), T1100G (12 K), T700G (12 K), M40S (12 K)) (levels (8) to (11)) and carbon fibers (24 K) (level (12)) manufactured by Toray Industries, Inc. were used. Note that the mass per unit length of the carbon fibers in the length direction was determined by cutting out the carbon fibers in units of 1m in the length direction and measuring the mass with a balance, and the results were (8) 1.043, (9) 0.502, (10) 0.825, (11) 0.501 g/m, and (12) 1.563.

### <Confirmation of Detection Accuracy>

Detection accuracy of the cut carbon fiber was evaluated using an X-ray thickness gauge (SX-1100) manufactured by Nanogray Inc.. The tube voltage, tube current, and irradiation size of the X-ray source unit were set to 16 kV, 30 uA, and φ about 7.5 mm, respectively. The radiation source 2 and the radiation receiving portion 4 of the radiation detector 3 were installed to face each other with carbon fiber to be measured interposed therebetween and were moved in the same direction at the same speed of 20 mm/sec in the width direction of the carbon fibers to perform measurement.

### <Example 5 and Comparative Example 5>

Using the method according to the prior art, detection was performed by the radiation detector at one point in the width direction of the base material. As illustrated in Fig. 4, the radiation attenuation rate logN was determined, and the base material mass d was calculated. The results are shown as Comparative Example 5 in Table 2. The results of calculating the base material mass d based on Formulas 4 to 6 of the present invention are shown as Example 5 in Table 2.

The detection accuracy was evaluated based on the mass per unit length in the length direction of the carbon fiber cut out and measured with a balance and the coefficient of determination R2 of the measured value obtained by a method using a radiation device as described above. From Table 2, comparison between Comparative Example 5 and Example 5 shows that the use of the measurement method according to the present invention increases the coefficient of determination R2 to 0.996, and improves the measurement accuracy, as compared with the case of using the method according to the prior art.

**[Table 2]**

| | Comparative Example 5 | Example 5 |
|---|---|---|
| Slit | 0.5 × 20 | 0.5 × 20 |
| Calculation method | Nt (1 point) | Ns (Area) |
| (W1 × D2)/(WO × D1) | 0.025 | 0.025 |
| R2 [-] coefficient of determination | 0.479 | 0.996 |

### DESCRIPTION OF REFERENCE SIGNS

1: Support frame including a drive unit configured to support a radiation device so as to be movable in a width direction
2: Radiation source
3: Radiation detector
4: Radiation receiving portion
5: Cover
X: Radiation device
Y: Tape-shaped base material
YS: Sheet-shaped base material
R: Resin
80: Take-up unit
81: Nip roll
82: Drive roll
90: Resin application device
91: Resin application roll
92: Resin reservoir
101: Conveyance roll

## Claims

1. A method for measuring a base material mass of a tape-shaped prepreg base material having a width of 1 to 20 mm and including a reinforcing fiber and a matrix resin, the method comprising: irradiating the tape-shaped prepreg base material with a radiation dose V₀ from a radiation source while traversing, in a width direction of the tape-shaped prepreg base material, a radiation device including the radiation source and a radiation detector; determining a radiation attenuation rate N, which is a ratio of V to V₀, from a radiation dose V incident on the radiation detector after transmission through the base material based on Formula 2 and Formula 3; and calculating a mass d per unit area of the tape-shaped prepreg base material based on the radiation attenuation rate Ns,
wherein the radiation attenuation rate N of the tape-shaped prepreg base material is determined, based on Formula 1, as a sum of area values of logNt of radiation attenuation rates Nt at respective points t, where t is an integer ranging from 1 to n, in the width direction. [Mathematical formula 1] $\begin{matrix}Ns = A {\sum }_{t = 1}^{n} log Nt Formula 1 \\ V = {V}_{0} exp \left(-{u}_{s}⋅{d}_{s}\right) Formula 2 \\ log Ns = - {u}_{s} ⋅ {d}_{s} Formula 3\end{matrix}$
uₛ: mass attenuation coefficient of tape-shaped prepreg base material
dₛ: base material mass of tape-shaped prepreg base material
Nt: radiation attenuation rate at each point t when radiation attenuation rates at n points are measured in a range from a = T1 to a = T2 in a width direction of the base material defined as an a-direction
Ns: radiation attenuation rate (area value of natural logarithm logNt of Nt at each point t)
A: operator (constant)
n: arbitrarily settable natural number

2. The method for measuring a base material mass of a tape-shaped prepreg base material according to claim 1, wherein (W1 × D2)/(W0 × D1) exceeds 0 and is 0.3 or less, where W0 is a base material width, W1 is a width of radiation incident on the radiation detector, D1 is a distance from an emitting portion of the radiation source to a receiving portion of the radiation detector, and D2 is a distance from the emitting portion of the radiation source to the tape-shaped prepreg base material.

3. The method for measuring a base material mass of a tape-shaped prepreg base material according to claim 1 or 2, wherein the tape-shaped prepreg base material to be measured has a width of 1 to 20 mm and a standard deviation of base material width of 0.1 mm or more over a length of 3000 m in a longitudinal direction.

4. A method for producing a tape-shaped prepreg base material, the method comprising:
applying a resin to a reinforcing fiber or impregnating the reinforcing fiber with the resin to obtain a tape-shaped prepreg base material; and
determining, for the tape-shaped prepreg base material, a base material mass per unit length in a length direction or a resin mass per unit length in the length direction by the method for measuring a base material mass of a tape-shaped prepreg base material according to claim 1 or 2,
wherein control is performed in the step of applying or impregnating so that a value of a determined item matches a target value.

5. A method for measuring a base material mass of a reinforcing fiber bundle, the method comprising:
irradiating a reinforcing fiber bundle base material having a width of 1 to 20 mm with a radiation dose V₀ from a radiation source while traversing, in a width direction of the reinforcing fiber bundle base material, a radiation device including the radiation source and a radiation detector; determining a radiation attenuation rate Nb,
which is a ratio of V to V₀, from a radiation dose V incident on the radiation detector after transmission through the reinforcing fiber bundle base material based on Formula 5 and Formula 6; and calculating a mass d per unit area of the reinforcing fiber bundle base material based on the radiation attenuation rate Nb,
wherein the radiation attenuation rate Nb of the reinforcing fiber bundle base material is determined, according to Formula 4, as a sum of area values of logNt of radiation attenuation rates Nt at respective points t, where t is an integer ranging from 1 to n, in the width direction. [Mathematical formula 2] $\begin{matrix}Nb = A {\sum }_{t = 1}^{n} log Nt Formula 4 \\ V = {V}_{0} exp \left(-{u}_{b}⋅{d}_{b}\right) Formula 5 \\ log Nb = - {u}_{b} ⋅ {d}_{b} Formula 6\end{matrix}$
u_{b}: mass attenuation coefficient of reinforcing fiber bundle base material
d_{b}: base material mass of reinforcing fiber bundle
Nt: radiation attenuation rate at each point t when radiation attenuation rates at n points are measured in a range from a = T1 to a = T2 in a width direction of the base material defined as an a-direction
Nb: radiation attenuation rate (area value of natural logarithm logNt of Nt at each point t)
A: operator (constant)
n: arbitrarily settable natural number

6. The method for measuring a base material mass of a reinforcing fiber bundle according to claim 5, wherein (W1 × D2)/(W0 × D1) exceeds 0 and is 0.3 or less, where W0 is a base material width, W1 is a width of radiation incident on the radiation detector, D1 is a distance from an emitting portion of the radiation source to a receiving portion of the radiation detector, and D2 is a distance from the emitting portion of the radiation source to the reinforcing fiber bundle base material.

7. The method for measuring a base material mass of a reinforcing fiber bundle according to claim 5 or 6, wherein, in a reinforcing fiber bundle base material having a width of 1 to 20 mm, the reinforcing fiber bundle to be measured has a standard deviation of base material width of 0.1 mm or more over a length of 3000 m in a longitudinal direction.

8. The method for producing a tape-shaped prepreg base material according to claim 4, the method comprising: determining the resin mass by subtracting the base material mass of the reinforcing fiber bundle, obtained by the method for measuring a base material mass of a reinforcing fiber bundle according to claim 5 or 6, from the base material mass of the tape-shaped prepreg base material, obtained by the method for measuring a base material mass of a tape-shaped prepreg base material according to claim 1 or 2, wherein control is performed so that the resin mass matches a target value.
